Europäisches Patentamt

European Patent Office

Office européen des brevets

(19)

(11) **EP 1 589 754 A2**

(12) **EUROPEAN PATENT APPLICATION**

(43) Date of publication:
**26.10.2005 Bulletin 2005/43**

(51) Int Cl.⁷: **H04N 5/77**, H04N 5/92

(21) Application number: **05252415.4**

(22) Date of filing: **18.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.04.2004 JP 2004124450**

(71) Applicant: **SONY CORPORATION**
**Tokyo (JP)**

(72) Inventors:
• **Takenaka, Koichi, Sony Corporation**
  **Shinagawa-Ku, Tokyo (JP)**
• **Agata, Hideyuki, Sony Corporation**
  **Shinagawa-Ku, Tokyo (JP)**
• **Urushihara, Makoto, Sony Corporation**
  **Shinagawa-Ku, Tokyo (JP)**

(74) Representative: **Leppard, Andrew John**
**D Young & Co**
**120 Holborn**
**London EC1N 2DY (GB)**

(54) **Information processing apparatus, imaging apparatus, information processing method, and program**

(57)     An information processing apparatus has a function of processing plural-channel audio signals associated with a video signal. The information processing apparatus includes an audio converting unit for generating a plurality of audio signals by converting the levels of the plural-channel audio signals in accordance with an adjusting parameter defined depending on information of image-capturing conditions concerning the video signal.

FIG. 1

**Description**

The present invention relates to an information processing apparatus, an imaging apparatus, an information processing method, and a program.

An apparatus (e.g., a camcorder) that can simultaneously record audio signals on plural channels and a video signal on a single recording medium or can play back the recorded audio and video signals is known.

When only stereophonic (2-channel) sound can be recorded or played back for a video signal acquired by video recording, it is difficult to obtain sufficient presence, and it is difficult to obtain a powerful acoustic effect for video displayed on a large screen. Accordingly, an apparatus (see, for example, Japanese Unexamined Patent Application Publication No. 2003-18543) is used in which, in a surround system formed by a combination of a sub-speaker installed differently in position from right, left, and center speakers, in addition to stereophonic sound and front center sound, 5.1-channel audio signals, which include surround sound (2 channels) and low frequency components, can be recorded or played back on a magnetic tape together with a video signal.

In an environment for reproducing surround sound based on audio signals on plural channels, it is difficult to enhance an acoustic effect while ignoring image-capturing conditions concerning a video signal.

For example, in a situation in which, in video recording with a camcorder, a picture of a person such as a particular person who speaks is recorded together with sound while performing a zooming (zoom-in) operation of zooming in the person, it is preferable that mainly sound from the center in front of the camcorder be emphasized than sound behind the camcorder. However, an apparatus of the related art only performs recording audio signals acquired through microphones for channels and playing back the recorded signals. Accordingly, audio processing based on image-capturing conditions in the video recording mode is not performed. Alternatively, sound is simply processed such that a camcorder person or an editor adjusts a sound level after the video recording. Although, in so-called "home theaters", etc., a surround system has begun to become widely used by general users, it is difficult to perform an operation, such as processing or editing of audio data, while viewing video. Accordingly, the surround system has a defect in a point of convenience.

In video recording, by enabling recording of image-capturing condition data as data (additional data) associated with video and audio signals on a disk recording medium or a tape recording medium together with the signals, when the audio signals are played back, their signal levels can be adjusted, so that an acoustic effect producing much presence can be obtained.

Accordingly, it is desirable that, when plural-channel audio signals associated a video signal are processed, by adjusting the levels of the audio signals in accordance with image-capturing conditions concerning a video signal, an acoustic effect, having reality, adapted for video, is obtained.

Aspects of the present invention are set out in the claims.

According to an embodiment of the present invention, there is provided an information processing apparatus including audio converting means for generating a plurality of audio signals by converting the levels of plural-channel audio signals in accordance with an adjusting parameter defined depending on information of image-capturing conditions concerning a video signal.

According to another embodiment of the present invention, there is provided a program for use in an information processing apparatus having a function of processing plural-channel audio signals associated with a video signal, the program including the step of changing a volume adjusting parameter in accordance with information of image-capturing conditions concerning the video signal, and generating a plurality of audio signals by converting the levels of the plural-channel audio signals based on the adjusting parameter.

In an embodiment of the present invention, the magnitudes of sounds corresponding to audio signals are adjusted based on an adjusting parameter in accordance with image-capturing conditions concerning a video signal.

According to an embodiment of the present invention, by performing level adjustment on audio signals in view of image-capturing conditions concerning a video signal, an acoustic effect, having reality, adapted for vide, can be obtained.

In a configuration form in which an adjusting parameter on volume balance is defined by magnification power of a zooming operation, in a zoom-in mode, by relatively emphasizing a front component than a rear component, sound from the front is emphasized, so that a zoom (perspective) effect can be produced.

In addition, when the magnification power of the zooming operation is large, in an audio signal including a front component, by relatively emphasizing a front component than right and left components, an acoustic zoom effect can be enhanced.

Regarding information of image-capturing conditions concerning a video signal, by recording, on a recording medium, the video signal and audio signals, and, in a playback mode, extracting the information from the recording medium together with the video signal and the audio signals, the information can be easily handled as additional information for video and audio obtained in video recording.

Embodiments of the present invention provide a technology in which, when sounds on plural channels are converted to generate surround sound, by reflecting information, such as zoom information in a video recording mode, on audio conversion, audio converting processing effective in reproducing presence is realized.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:

Fig. 1 is a block diagram showing an example of the configuration of an imaging system and recording system concerning an embodiment of the present invention;
Fig. 2 is a block diagram showing an example of a signal processing system according to an embodiment of the present invention;
Fig. 3 is a perspective view of an example of an exterior view of a camcorder;
Fig. 4 is a block diagram illustrating an example of the configuration of a system including a camcorder and an information processing apparatus;
Fig. 5 is a schematic illustration of 4-channel sounds;
Fig. 6 is a schematic illustration of 5.1-channel sounds;
Fig. 7 is a schematic illustration of a basic example of audio conversion from 4 channels to 5.1 channels; and
Fig. 8 is a graph a volume adjusting parameter for magnification power of zooming.

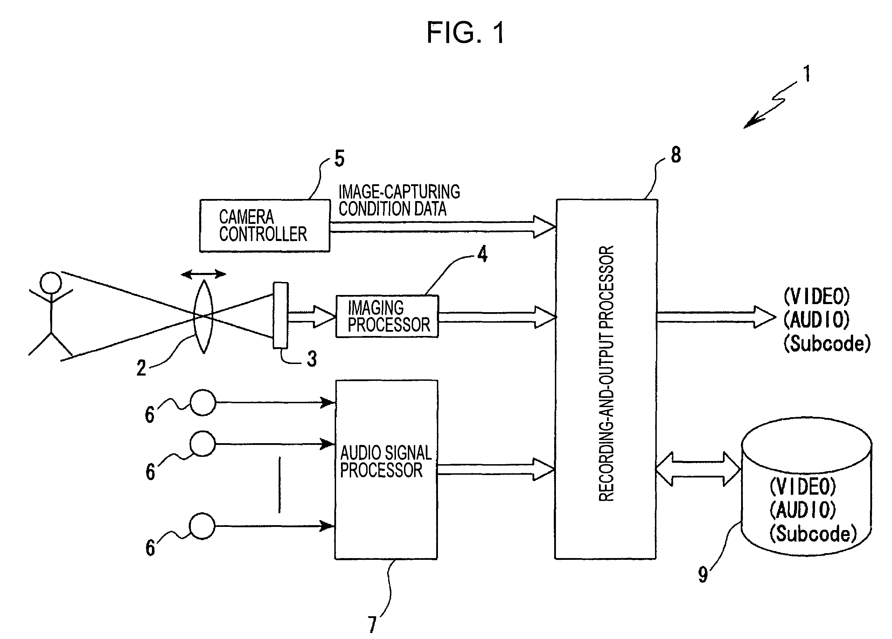

Fig. 1 shows an example of the configuration of an imaging system and recording system concerning an embodiment of the present invention.

An imaging processing apparatus 1 has an imaging function and a function of recording a video signal and multichannel (e.g., 4-channel) audio signals, which are obtained by image capturing, on a predetermined recording medium, a disk recording medium such as a digital versatile disk (DVD), and a tape recording medium such as a magnetic tape. Types of the imaging processing apparatus 1 include, for example, camcorders, computers each having a camera function, personal digital assistants (PDAs), various video apparatuses.

A camera system included in the imaging processing apparatus 1 includes a variable-magnification optical system 2 including a zoom lens, an imaging unit 3 using a solid-state imaging element (e.g., a CCD or C-MOS area image sensor), an imaging tube, etc. A signal obtained by the imaging unit 3 is sent and processed by an imaging processor 4. The imaging processor 4 performs, for example, analog-to-digital conversion or the like, and an output signal from the imaging processor 4 is sent to a recording-and-output processor 8.

A camera controller 5 is assigned to lens system servo control including zooming control and focus control, control of an electronic shutter of the imaging unit 3, etc. The camera controller 5 generates and manages camera-system image-capturing condition data. Image-capturing-condition information concerning the video signal, for example, a picture size, an angle of view, and magnification power of zooming, or photometric information and information such as brightness in image capturing and ambient illumination, are sent to the recording-and-output processor 8.

A plurality of microphones 6 form an audio input unit for acquiring an audio signal for each channel. The audio signal from each microphone 6 is sent to an audio signal processor 7. In the audio signal processor 7, the send audio signal is amplified by an amplifier therein and is converted from analog to digital form. The processed signal is sent to the recording-and-output processor 8.

The recording-and-output processor 8 has a function of processing the video and audio signals and recording the processed signals in a storage medium by using a storage device 9, or outputting the video and audio signals to an external device (not shown).

For example, a video signal (indicated by " (VIDEO)" in Fig. 1), an audio signal (indicated by "(AUDIO)"), and subcode data (indicated by"(Subcode)") are processed by the recording-and-output processor 8. The processed signals and data are recorded in the storage device 9 or are output to the external device.

The subcode data includes data such as data of image-capturing conditions from the camera controller 5, which is associated with the video and audio signals.

A drive for recording to an optical recording medium such as a magneto-optical recording medium, a device for recording to a magnetic recording medium such as a magnetic disk or a DV (digital video) tape, or the like, is used as the storage device 9. Since, in an application of an embodiment of the present invention, a recording form is not considered, the embodiment of the present invention can be practiced in various forms using recording media such as a nonvolatile semiconductor memory and a hard disk. The storage device 9 and the recording-and-output processor 8 form a recording/playback unit. The storage device 9 records the image-capturing condition data (concerning the video signal) on the recording medium together with the video and audio signals, or plays back the image-capturing condition data from the recording medium together with the video and audio signals.

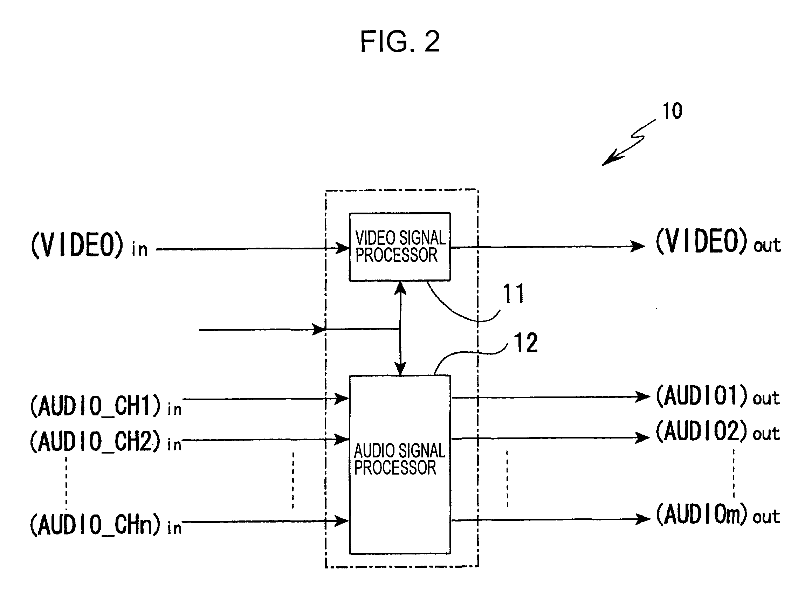

Fig. 2 is a block diagram showing an example of a signal processing system.

An information processing apparatus 10 has a function of processing a video signal and plural-channel audio signals associated therewith, and includes a video signal processor 11 and an audio signal processor 12 for audio conversion.

An input video signal (indicated by "(VIDEO)$_{in}$" in Fig. 2) is sent to the video signal processor 11. The video signal processor 11 performs necessary processing on the video signal. The processed video signal is supplied as an output video signal (indicated by "(VIDEO)$_{out}$" in Fig. 2) to a subsequent stage circuit (not shown). The processed video signal is supplied for video display to a display unit such as a liquid crystal display or a cathode-ray tube or to a projector.

Input audio signals for plural channels, indicated by "(AUDIO_CH$_{j)in}$" (j = 1, 2, ..., n) in Fig. 2, are sent and processed in the audio signal processor 12. A plurality of output audio signals (indicated by "(AUDIO$_{i)out}$" (i = 1, 2, ..., m) in Fig. 2) obtained by the audio signal processor 12 are sent to audio output devices (speakers forming a surround system). For example, in an application of an embodiment of the present invention to a configuration for converting 4-channel audio signals to 5.1-channel audio signals, among front components (three components, that is, right, left, and center components), a low frequency component, and rear components (two components, that is, right and left components), sound can be adjusted concerning the front components and the rear components.

Data of camera-system image-capturing conditions is sent and referred to in the video signal processor 11 and the audio signal processor 12. For example, by changing balance concerning sound adjustment of the front components and the rear components in response to zoom information in a video recording mode, an acoustic effect producing enhanced presence can be obtained. A specific method therefor is described later. Alternatively, in response to information such ambient illumination in the video recording mode, such a rendering effect that, when the ambient illumination lowers, an overall volume level is lowered, or a background sound level is relatively increased, can be obtained. In other words, the audio signal processor 12 has adjusting parameters which are defined depending on image-capturing conditions concerning the video signal. The audio signal processor 12 adjusts the levels of the audio signals on plural channels and outputs the adjusted levels.

In an application of an embodiment of the present invention, a form of video processing by the video signal processor 11 is not considered. Thus, various image processing, editing, and modification in response to data of camera-system image-capturing conditions can be employed.

Application forms of the configurations shown in Figs. 1 and 2 include the following examples:

· a configuration in which an apparatus having the configuration shown in Fig. 1 and an apparatus having the configuration shown in Fig. 2 are separately provided, with both connected to each other; and
· a configuration in which a single apparatus includes one of the entirety of the configuration shown in Fig. 1 and a part thereof, and the configuration shown in Fig. 2.

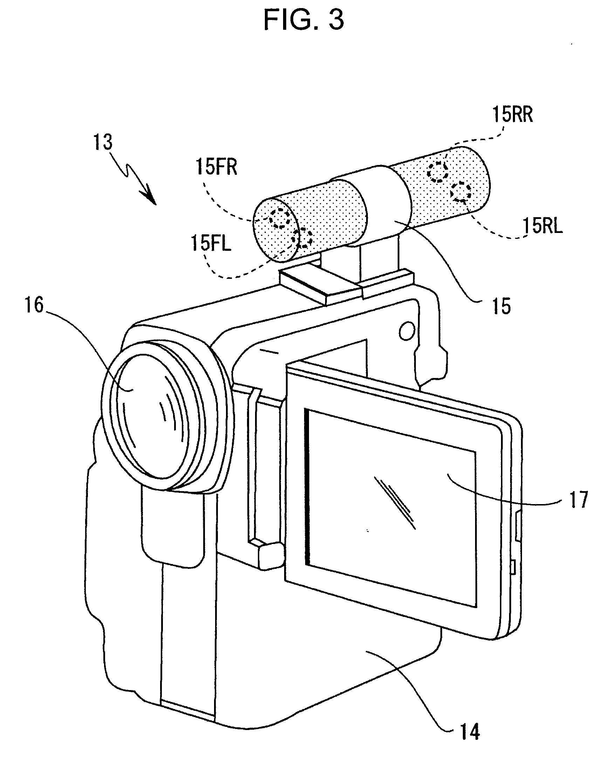

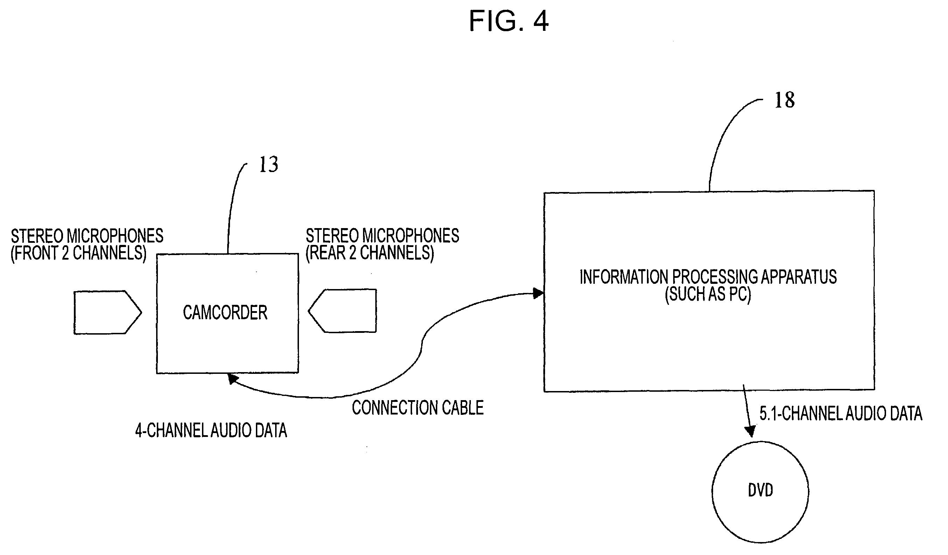

Figs. 3 and 4 show an example in which an embodiment of the present invention is applied to the former. Fig. 3 shows an example of an exterior view of a camcorder 13. Fig. 4 shows an example of the configuration of a system including an information processing apparatus that can records, on a DVD, video data captured by the camcorder 13 together with audio data.

The camcorder 13 shown in Fig. 3 can record and play back audio signals on four channels including two front channels (right and left channels) and two rear channels (right and left channels).

In this case, an upper portion of a housing 14 forming the body of the camcorder 13 is provided with an attachment portion for a sound collector 15. A supporter of the sound collector 15 is removably attached to the attachment portion.

The sound collector 15 has four microphones 15FR, 15FL, 15RR, and 15RL. The microphones 15FR and 15FL are provided so as to be directed to the front (capturing direction) of the camcorder 13. The microphone 15FR has right directivity in the video recording direction, and the microphone 15FL has left directivity in the video recording direction. The microphones 15RR and 15RL are provided so as to be directed to the rear of the camcorder 13. The microphone 15RR has right directivity in the video recording direction, and the microphone 15RL has left directivity in the video recording direction.

The camcorder 13 also has a image capturing lens 16 and a monitor unit 17. In this case, the camcorder 13 has a structure in which the sound collector 15 is provided on the body of the camcorder 13. This structure is used to sufficiently reduce an adverse effect of acoustic noise generated in the camcorder 13. Thus, obviously, even a form in which each microphone is provided on the body of the camcorder 13, for example, a form in which the microphones 15FR and 15FL are provided in a front portion of the housing 14 and the microphones 15RR and 15RL are provided in a rear portion of the housing 14, may be used.

Captured video data and audio data acquired through each microphone are recorded in digital form on, for example, a magnetic tape (e.g., a DV (digital video) tape). In other words, a recording processor in the camcorder 13 performs predetermined modulation (frequency modulation) on the video signal. The modulated video signal is recorded on the magnetic tape by a magnetic head forming a helical scanning magnetic recording/playback unit. Each of tracks that form recording frames has, not only a video recording area and an audio recording area, but also a subcode area for storing information such as a title and TOC (Tables Of Contents). In the subcode area, subcode data (including zoom information at a video recording mode with the camcorder 13) is recorded. For example, in the NTSC DV format, regarding data of one frame, for video data, 138 data blocks including 76-byte data are used, and, for audio data, nine data blocks including 76-byte data are used. Twelve data blocks including 5-byte data are used for recording subcode data.

For example, a computer apparatus (e.g., a personal computer or CE apparatus) having a function of recording on a DVD is used as an information processing apparatus 18 (see Fig. 4). The information processing apparatus 18 is connected to the camcorder 13 by using a cable or the like, or by using wireless communication. The information processing apparatus 18 has a function of capturing data sent from the camcorder 13, converting the captured data, if necessary, and recording video data and audio data on the DVD. Since the information processing apparatus 18 can record multichannel audio data on the DVD, the DVD can be created in an audio environment with much presence.

An overall flow in the case of creating a DVD is as follows:

(step 1) acquisition of video data and (4-channel) audio data from the camcorder 13;
(step 2) editing and modification (cutting, surround audio parameter adjustment, etc.);
(step 3) audio conversion;
(step 4) authoring (such as menu creation and conversion of video and audio into a DVD-Video form); and
(step 5) DVD creation (recording of video, audio, etc.).

In this system, at first, by using the camcorder 13, which is capable of multichannel audio recording (4-channel audio recording in this case), 4-channel audio data is recorded on the tape together with video data.

The camcorder 13 and the information processing apparatus 18 are connected to each other. For example, an IEEE 1394 cable or the like is used to connect both.

This makes it possible for the information processing apparatus 18 to capture the data from the camcorder 13, that is, the captured video data and the 4-channel audio data. When processing for capturing the video and audio data can be performed only at a playback (1x) speed of the camcorder 13, if the information processing apparatus 18 can perform high speed information processing, simultaneously with the data capturing, the information processing apparatus 18 can convert 4-channel PCM (pulse-code modulation) audio into 5.1-channel PCM audio (conversion of 5.1-channel PCM audio into 5.1-channel AC-3 audio is later performed in view of a time necessary for the conversion). Alternatively, by simultaneously converting 4-channel PCM audio into 5.1-channel AC-3 audio, the time necessary for the conversion can be reduced. "AC-3" is a highly-efficient audio-signal coding method developed by Dolby Laboratories in the United States in which reproduced 5.1-channel surround sound can be output (including front right and left channels, a center channel, rear right and left channels, and a 0.1-channel low range channel).

At this time, by automatically identifying, based on the subcode, after-recording sounds (2 channels + 2 channels) for sound recording after video recording, and 4-channel sounds, in the case of the after-recording sounds, three audio channels, that is, "main-sound", "sub-sound", and "main+sub-sound", may be used to perform recording of audio data on the DVD.

When the information processing apparatus 18 captures the data, the information processing apparatus 18 and an audio converter can perform the following editing operations:

. cutting of video (deletion of unnecessary scenes); and
. monitoring of volume balance in a surround audio playback apparatus and ratio adjustment (gain adjustment) concerning front, rear, and center components, and low frequency components such as LFE (low-frequency effects: a low range woofer component).

The audio data is converted into data such as 5.1-channel AC-3 (Dolby AC3) and multichannel linear PCM data.

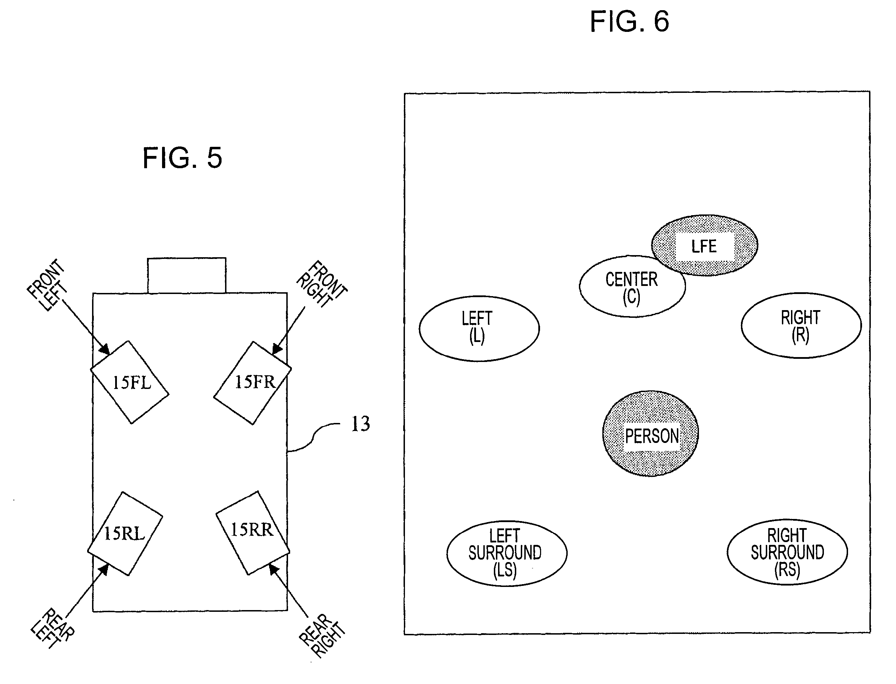

Figs. 5 and 6 are schematic illustrations of 4-channel sounds and 5.1-channel sounds, respectively. Fig. 5 shows arrangement of the microphones of the camcorder 13, and Fig. 6 shows arrangement of speakers in a surround playback environment.

The meanings of the symbols shown in Figs. 5 and 6 are as follows:

(input sound)

· Front Left (FL): left sound in the front of the camcorder 13;
· Front Right (FR): right sound in the front of the camcorder 13;
· Rear Left (RL): left sound in the rear of the camcorder 13; and
· Rear Right (RR): right sound in the rear of the camcorder 13, and

(output sound)

· Left (L): front left sound;
· Right (R): front right sound;
· Center (C): front center sound;
· LEF: low range sound;

- Left Surround (Ls): rear left sound; and
- Right Surround Rs): rear right sound.

In audio conversion from 4-channel sounds into 5.1-channel sounds, by adjusting front (R, L, C) components so as to be slightly strong, more natural surround sound can be finished. This is because, since the camcorder 13 captures an image of a subject in the front, in many cases, also sound can be similarly heard from the front, and the human ear has a structure in which sound can be easily heard from the front than from the rear.

In the case of video recording for a person who speaks in the front of the camcorder 13, it is preferable to emphasize the center component (C), and, in other cases, it is preferable to suppress the center component (the quality of sound at a reproduction time lowers since horizontal orientation shifts). In general, in the case of such a scene that a person speaks in a lecture meeting or the like, for DVD creation, the stereophonic system of the related art is more appropriate than the surround system. Accordingly, when a DVD is created in the information processing apparatus 18, it is preferable that the information processing apparatus 18 be configured so that a user can select one of the 5.1-channel system and the stereophonic system for performing audio recording on the DVD. In addition, when the surround system is used to perform audio recording on the DVD, it is preferable to adjust the center component to be low as much as possible (to be zero in some situations, etc.).

By recording, in the subcode area, zoom information obtained at the video recording time with the camcorder 13 in a form included in subcode data, and extracting the zoom information from the subcode data in the information processing apparatus 18, sound creation reflecting image-capturing conditions can be performed. For example, in a zoom-in case, that is, when the camcorder 13 focuses more forward, by increasing the volume of the front components, such an acoustic impression as if the camcorder 13 actually zoomed in can be given to a listener.

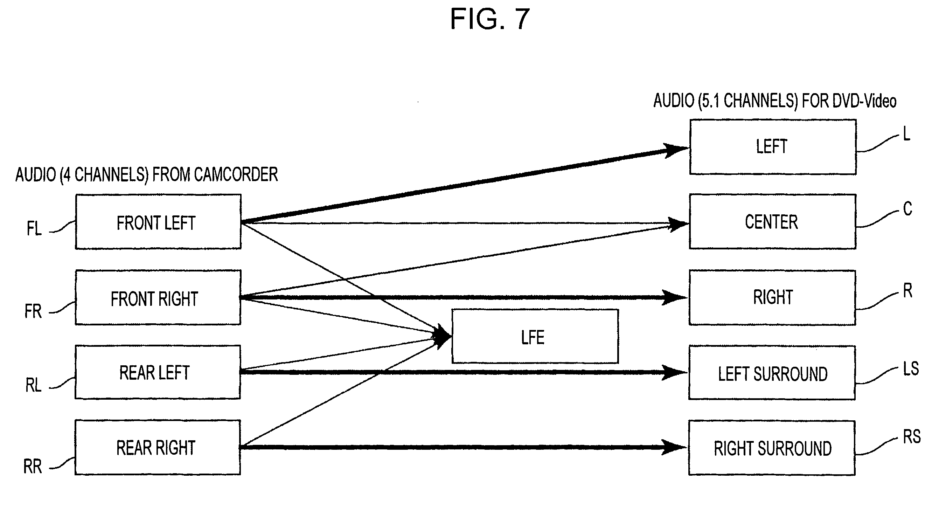

Fig. 7 is a block diagram illustrating a basic example of conversion from 4-channel sound to 5.1-channel sound concerning the above step 3.

At first, input sounds, FL (Front Left), FR (Front Right), RL (Rear Left), and RR (Rear Right) sounds are assigned to L, R, Ls, and Rs output sounds, respectively, as follows:

- front left sound (FL) to front left sound (L);
- front right sound (FR) to front right sound (R);
- rear left sound (RL) to rear left sound (Ls); and
- rear right sound (RR) to rear right sound (Rs)

The front center component is generated by using portions of the FL and FR sounds. In addition, low frequency components of the above (FL, FR, RL, RR) sounds are extracted to generate the LFE sound.

This conversion produces 5.1-channel sound. In an embodiment of the present invention, the levels of audio signals on plural channels are converted in accordance with adjusting parameters defined by the image-capturing condition data including zoom information.

Audio conversion using zoom information is described below. For example, in the zoom-in mode, by emphasizing the front (L, R, C) components than the rear (Ls, Rs) components, a virtual effect in which an object is approached can be produced.

A converting process is as follows:

(1) step of generating the LFE component;
(2) step of generating the front (L, C, R) components; and
(3) step of generating the rear (Ls, Rs) components.

In (1) the step of generating the LFE component, by respectively extracting low frequency components from the FL, FR, and RR components, the LFE component is generated. Specifically, by using a lowpass filter, a low pitch sound component can be obtained based on an audio signal in which frequency components equal to or lower than 120 Hz are extracted.

Components obtained by subtracting the LFE low frequency component from the FL, FR, RL, and RR components are represented in lower-case letter by fl, fr, rl, and rr, respectively.

In (2) the step of generating the front (L, C, R) components, front components are generated from the fl and fr components.

In the following description, an adjusting parameter for adjusting a ratio between the front right and left components is represented by "α", and the parameter is defined by magnification power of the zooming operation. Parameter α is set so that, for example, in a zoom-out mode, it is equal to one ("α = 1"), and, in a zoom-out mode, it has a predetermined value greater than one ("α > 1").

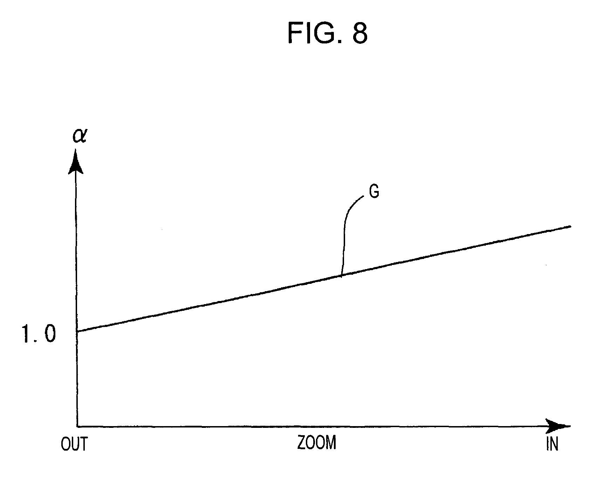

Fig. 8 is a graph showing the relationship between magnification power (indicated by the horizontal axis) and parameter α (indicated by the vertical axis).

In this example, the line G indicates that parameter α increases in linear function form depending on magnification power of zooming. In some cases, a change in curved form is allowed so that parameter α changes so as to have a saturation characteristic.

When parameter α concerning a zoom coefficient determined by magnification power is used, a conversion rule concerning front right and left components is as follows:

- "fl2 - fl" or "fl $\times$ α";

and

"fr2 = fr" or "fr $\times$ $\alpha$".

where "fr2" and "fl2" represent right and left components obtained by conversion.

Regarding each sound, it is necessary to consider a possibility that, by multiplying the component by parameter $\alpha$, which is not less than one, the level (volume) of audio data may exceed an upper limit. In other words, although, in a volume range in which the fl or fr component does not exceed the upper limit, conversion of "fl $\times$ $\alpha$" and "fr $\times$ $\alpha$" is allowed, if the fl or fr component is likely to exceed the upper limit, it is necessary to employ definition of "fl2 = fl" or "fr2 = fr", or to perform processing such as adjusting parameter $\alpha$ so that the upper limit is not exceeded.

Among methods for generating the front center component by extracting portions of the fl and fr components, there is a method that emphasizes the front center component than the right and left components at the zoom-in mode, as described later.

In (3) the step of generating the rear (Ls, Rs) components, the rear right and left components are generated.

A conversion rule using parameter $\alpha$ is as follows:

$$Ls = rl/\alpha;$$

and

$$Rs = rr/\alpha.$$

In other words, the level of each rear component decreases as the value of parameter $\alpha$ increases.

As described above, as the magnification power increases, the level of an audio signal mainly including a front component is relatively emphasized than the level of an audio signal mainly including a rear component.

This relationship includes the following various forms:

- form in which the front component is enhanced than the rear component;
- form in which the front component is emphasized by weakening the rear component than the front component; and
- form in which the front component is emphasized by emphasizing the front component and weakening the rear component.

Regarding, for example, the generation of the rear component, by using not parameter $\alpha$ itself but another parameter having correlation with parameter $\alpha$, the Ls and Rs components can be respectively derived from the rl and rr components.

Regarding the front components in (2) the step of generating the front (L, C, R) components, emphasis of the center component can be further added in the zoom-in mode, as follows:

$$L = (1 - \beta) \times fl2;$$

$$R = (1 - \beta) \times fr2;$$

and

$$C = \beta \times (fl2 + fr2).$$

where parameter $\beta$ defines a ratio of the center components to the front right and left components.

For example, in the case of enhancing the surround effect, parameter $\beta$ may be decreased (to 0 to approximately 0.2). Conversely, in the case of suppressing the surround effect, for example, in video recording at a lecture meeting, parameter $\beta$ may be increased (to approximately 0.3 to 0.8).

In the case of enhancing the zoom effect, the following expressions obtained by generalizing the above expressions can be used:

$$L = (1 - f(\alpha) \times \beta) \times fl2;$$

$$R = (1 - f(\alpha) \times \beta) \times fr2;$$

and

$$C = f(\alpha) \times \beta \times (fl2 + fr2).$$

"f($\alpha$)" is an arbitrary function concerning parameter $\alpha$. By multiplying the value of parameter $\beta$ of the center component ratio by the value of f($\alpha$) having correlation with parameter $\alpha$, the center component can be further emphasized in the zoom-in mode.

Function f($\alpha$) may be set so that, by using, for example, constant $\gamma$, f($\alpha$) = $\gamma \times \alpha$. Alternatively, it is also possible to use an expression obtained by operation, such as measurement and simulation, from a relationship between the microphones and the video-recording-system zoom characteristic.

In any event, when a volume adjusting parameter is defined by the magnification power of the zooming operation, if the magnification power is large, the level of an audio signal including the front center component is converted so as to be relatively enhanced than the levels of audio signals including the front right and left components.

In the above description, a case in which a parameter, such as $\alpha$, consecutively changes in accordance with the zooming operation has been described.

The application of an embodiment of the present invention is not limited to this case. Embodiments of the present invention can be practiced in various forms in which parameters gradually change in accordance with the zooming operation, and in which parameters consecutively change in a predetermined range and gradually change in another range. In addition, regarding adjusting parameters, there is a method in which not only the zoom information but also different information (e. g., setting information in the video recording mode and user's operation information, etc.,) is added to the information.

The above volume adjustment is automatically performed by the information processing apparatus 18 based on the image-capturing condition data from the camcorder 13. Regarding another function, when data captured by the camcorder 13 is played back, ratios concerning the front components, the rear components, and the center component can be adjusted while the user monitors the audio data.

In addition, regarding the LFE component, there is a problem in that its adjustment is subject to an adverse effect such as mechanical noise of the camcorder 13, depending on the position of each microphone. Specifically, since the LEF component has low directivity, for generating the LFE component, it is preferable to emphasize contribution of each microphone (at a distance from a noise generator) that is hardly affected by noise. In other words, sound having less noise can be recorded. Accordingly, it is preferable to perform storing, in a database form for each camcorder model, information indicating which of microphones can be easily affected by noise or which of microphones can hardly be affected by noise, and information indicating which microphone has a component contribution to be enhanced, and whether to include both information in the subcode. Alternatively, it is preferable to transfer the information on a communication channel established between apparatuses.

After the step 4 of authoring (such as menu creation and conversion of video and audio into a DVD-Video form), in the step 5 of DVD creation (recording of video, audio, etc.), the audio data, etc., generated in the above processing, is recorded on the DVD. By playing back video and audio in a surround playback environment, such as a home theater set, using DVD, video display and acoustic effect with much presence can be enjoyed. The values of predetermined parameters $\alpha$ and $\beta$, etc., can be coded and recorded on a recording medium such as DVD together with audio data. For example, this is effective in the case of conversion to unconverted audio data, and the case of further processing audio data based on the parameter values.

The above processing is realized by using a central processing unit (CPU) in the information processing apparatus 18 and a program which is interpreted and executed by the CPU. In other words, the above program includes a processing step of changing a volume control parameter in accordance with image-capturing conditions concerning the video signal, and generating plural audio signals by converting the levels of plural-channel audio signals in accordance with the volume control parameter. When defining the volume control parameter in accordance with magnification power of the zooming operation, the program further includes the following steps of:

· when the magnification power of the zooming operation is large, converting the level of an audio signal mainly including a front component so that it is relatively emphasized than the level of an audio signal mainly including a rear component; and

· when the magnification power of the zooming operation is large, converting the level of an audio signal mainly including a front center component so that it is relatively emphasized than the level of an audio signal including front right and left components.

In the foregoing case, in a system formed by connecting a camcorder and an information processing apparatus which are separate apparatuses, and in which the camcorder includes four microphones and can record front left, front right, rear left, and rear right sounds, and in which the information processing apparatus can capture data from the camcorder and records the data in a storage medium, an example of converting 4-channel audio signal of a movie into 5.1-channel audio signal and recording the 5.1-channel audio signal on a DVD has been described. An embodiment of the present invention is applicable not only to the above example, but also to apparatuses (e.g., a comcorder using DVD-ROM as a recording medium and a camcorder including a hard disk drive) each having the functions of the camcorder and the information processing apparatus, etc. In addition, the application of an embodiment of the present invention is not limited to a 5.1-channel surround system. An embodiment of the present invention is applicable to a 6.1-channel system including an additional rear center speaker and to a 7.1-channel system having a further increased number of speakers. Moreover, only processing that relatively adjusts front and rear audio output levels without changing the number of audio outputs and converting the levels may be performed.

By changing adjustment balance for each sound depending on image capturing circumstance of a camcorder or the like, presence can be enhanced. For example, in a zoom-in mode, by increasing the ratio of a front component, such an effect as if an object were zoomed in approached not only in video but also in audio can be produced.

In embodiments, an information processing apparatus has a function of processing plural-channel audio signals associated with a video signal. The information processing apparatus includes an audio converting unit for generating a plurality of audio signals by converting the levels of the plural-channel audio signals in accordance with an adjusting parameter defined depending on information of image-capturing conditions concerning the video signal.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. An information processing apparatus having a function of processing plural-channel audio signals associated with a video signal, the information processing apparatus comprising audio converting means for generating a plurality of audio signals by converting the levels of the plural-channel audio signals in accordance with an adjusting parameter defined depending on information of image-capturing conditions concerning the video signal.

2. The information processing apparatus according to claim 1, wherein, when the adjusting parameter is defined by magnification power of a zooming operation, said audio converting means performs conversion so that, among the levels of the plural-channel audio signals, the levels of audio signals mainly including front components are relatively emphasized than the levels of audio signals mainly including rear components.

3. The information processing apparatus according to claim 1, wherein, when the adjusting parameter is defined by magnification power of a zooming operation, said audio converting means performs conversion so that, among the levels of the plural-channel audio signals, in the audio signals mainly including the front components, the level of an audio signal mainly including a center component is relatively emphasized than the level of each of audio signals including right and left components.

4. The information processing apparatus according to claim 2, wherein said audio converting means performs conversion so that, among the levels of the plural-channel audio signals, in the audio signals mainly including the front components, the level of an audio signal including a center component is relatively emphasized than the level of each of audio signals including right and left components.

5. An imaging apparatus comprising:

image-capturing means for outputting a video signal in accordance with captured images of a subject;
image-capturing-condition generating means for generating information of image-capturing conditions at the time of image capturing by said image-capturing means; and
audio signal input means for acquiring audio signals on plural channels.

6. The imaging apparatus according to claim 5, further comprising recording means for recording the information of the image-capturing conditions in a storage medium together with image data and the audio signals.

7. The imaging apparatus according to claim 5, further comprising audio converting means for converting the levels of the audio signals on the plural channels in accordance with the information of the image-capturing conditions.

8. A program for use in an information processing apparatus having a function of plural-channel audio signals associated with a video signal, the program comprising the step of changing a volume adjusting parameter in accordance with information of image-capturing conditions concerning the video signal, and generating a plurality of audio signals by converting the levels of the plural-channel audio signals in accordance with the adjusting parameter.

9. The program according to claim 8, further comprising the step of performing conversion in accordance with the information of the image-capturing conditions concerning the video signal so that, among the levels of the plural-channel audio signals, the levels of audio signals mainly including front components are relatively emphasized than the levels of audio signals mainly including rear components.

10. The program according to claim 8, further comprising the step of, when magnification power of a zooming operation is large, performing conversion so that, among the levels of the plural-channel audio signals, in the audio signals mainly including front components, the level of an audio signal mainly including a center component is relatively emphasized than the level of each of audio signals including right and left components.

**11.** An information processing method comprising the steps of:

changing a volume adjusting parameter in accordance with information of image-capturing conditions concerning a video signal; and generating a plurality of audio signals by converting the level of plural-channel audio signals in accordance with the adjusting parameter.

**12.** An information processing apparatus having a function of processing plural-channel audio signals associated with a video signal, the information processing apparatus comprising an audio converter generating a plurality of audio signals by converting the levels of the plural-channel audio signals in accordance with an adjusting parameter defined depending on information of image-capturing conditions concerning the video signal.

**13.** An imaging apparatus comprising:

an image-capturing unit outputting a video signal in accordance with captured images of a subject;
an image-capturing-condition generator generating information of image-capturing conditions at the time of image capturing by said image-capturing unit; and
an audio signal input unit for acquiring audio signals on plural channels.

# FIG. 1

EP 1 589 754 A2

# FIG. 2

EP 1 589 754 A2

# FIG. 3

# FIG. 4

STEREO MICROPHONES (FRONT 2 CHANNELS)

STEREO MICROPHONES (REAR 2 CHANNELS)

13

CAMCORDER

18

INFORMATION PROCESSING APPARATUS (SUCH AS PC)

CONNECTION CABLE

4-CHANNEL AUDIO DATA

5.1-CHANNEL AUDIO DATA

DVD

EP 1 589 754 A2

# FIG. 5

# FIG. 6

FRONT LEFT

FRONT RIGHT

15FL

15FR

13

15RL

15RR

REAR LEFT

REAR RIGHT

LFE

CENTER (C)

LEFT (L)

RIGHT (R)

PERSON

LEFT SURROUND (LS)

RIGHT SURROUND (RS)

EP 1 589 754 A2

# FIG. 7

AUDIO (4 CHANNELS) FROM CAMCORDER

AUDIO (5.1 CHANNELS) FOR DVD-Video

| FL — FRONT LEFT |
| FR — FRONT RIGHT |
| RL — REAR LEFT |
| RR — REAR RIGHT |

| LFE |

| LEFT — L |
| CENTER — C |
| RIGHT — R |
| LEFT SURROUND — LS |
| RIGHT SURROUND — RS |

EP 1 589 754 A2

FIG. 8